# EUROPEAN PATENT SPECIFICATION

(11) **EP 3 311 906 B1**
(45) Date of publication and mention of the grant of the patent: **30.06.2021**
(21) Application number: 16835230.0
(22) Date of filing: 10.08.2016
(51) Int. Cl.: B01D 59/26, B01D 15/00, B01J 20/06, G21F 9/06, G21F 9/12, B01D 59/00, C01B 4/00

(54) **TRITIUM ABSORBER AND METHOD FOR SEPARATING TRITIUM FROM HEAVY WATER**
TRITIUM-ABSORBER UND VERFAHREN ZUR ABSCHEIDUNG VON TRITIUM AUS SCHWEREM WASSER
ABSORBEUR DE TRITIUM ET PROCÉDÉ DE SÉPARATION DU TRITIUM À PARTIR D'EAU LOURDE

(30) Priority: 11.08.2015 JP 2015159252
(43) Date of publication of application: 25.04.2018
(73) Proprietor: Forward Science Laboratory Co., Ltd., Oita-shi, Oita 870-1124 (JP)
(72) Inventor: KOYANAKA Hideki, Oita-shi Oita 870-1124 (JP)
(74) Representative: Dehns
(86) International application number: PCT/JP2016/073678
(87) International publication number: WO 2017/026533

(56) References cited:
- WO-A1-99/48586
- WO-A1-2015/037734
- WO-A1-2015/037734
- JP-A- S5 393 294
- JP-A- 2003 521 362
- JP-A- 2013 122 453
- HIDEKI KOYANAKA ET AL: "Extracting Tritium from Water Using a Protonic Manganese Oxide Spinel", SEPARATION SCIENCE AND TECHNOLOGY, vol. 50, 8 May 2015 (2015-05-08), pages 2142-2146, XP055345500, ISSN: 0149-6395, DOI: 10.1080/01496395.2015.1018440
- KOYANAKA, HIDEKI: 'Extracting Tritium from Water Using a Protonic Manganese Oxide Spinel' SEPARATION SCIENCE AND TECHNOLOGY vol. 50, 23 April 2015, ISSN 0149-6395 pages 2142 - 2146, XP055345500
- KYOTO UNIVERSITY: 'Extracting Tritium from Water Using a Protonic Manganese Oxide Spinel', [Online] 22 April 2015, pages 1 - 3, XP055363844 Retrieved from the Internet: <URL:http://www.kyoto-u.ac.jp/ja/ research/research_results/2015/documents/15 0422 _1/03.pdf> [retrieved on 2016-09-13]

## Description

### Technical Field

The present invention relates to an absorbing material to separate tritium from heavy water, and a method for separating tritium.

### Background Art

Tritium (³H) is an isotope of hydrogen (¹H), and is also a radioactive element that emits β rays (electron beam) and has a half-life period of 12.3 years. In the environment, tritium (³H) is dissolved in light water (¹H₂O) as an isotopomer of water (³H¹HO). Further, because chemical properties of tritium (³H) are extremely similar to those of hydrogen (¹H) or deuterium (²H), in the conventional isotope separation technique, tritium (³H) is separated by utilizing the difference in physical properties such as a boiling point, and mass regarding isotopomers of a water molecule (³H₂O, ³H²HO, ²H₂O, ²H¹HO, and ¹H₂O), or isotopomers of hydrogen gas (³H₂, ³H²H, ²H₂, ²H¹H, and ¹H₂). These conventional techniques are described, for example, in Vasaru, G. Tritium Isotope Separation 1993, CRC Press, Chap. 4-5, Villani, S. Isotope Separation 1976, Am. Nuclear Soc., Chap. 9, Gould, R.F. Separation of Hydrogen Isotopes 1978, Am. Nuclear Soc., Chap. 9.

Recently, it was reported that when a manganese oxide containing hydrogen ions (¹H⁺) is applied as an absorbing material in light water (¹H₂O) containing tritium (³H) as a water molecule (³H¹HO), isotopomers (O³H⁻) dissolved as hydroxide ions are oxidatively dissociated on a particle surface of the manganese oxide, and at that time, the generated tritium ions (³H⁺) are absorbed in a crystal of a manganese oxide, as a result of which tritium (³H) can be chemically separated from the light water (¹H₂O). The technique is a separation technique in which tritium ions (³H⁺) in light water are ion-exchanged with hydrogen ions (¹H⁺) in a solid phase of an absorbing material, and the tritium (³H) is taken to a crystal of the absorbing material from the light water (¹H₂O). Hideki Koyanaka and Hideo Miyatake, "Extracting tritium from water using a protonic manganese oxide spinel", Separation Science and Technology, 50, 14, 2142-2146, (2015), and WO 2015/037734. In this technique, tritium (³H) can be separated from light water at room temperature, therefore, tritium (³H) can be inexpensively separated with high efficiency from light water (¹H₂O) as compared with a conventional technique.

However, it has not been disclosed at all whether or not the tritium (³H) dissolved in heavy water (²H₂O, or ²H¹HO) can be separated in a method described in WO 2015/037734. In addition, in the case described in WO 2015/037734 where a manganese oxide containing hydrogen ions (¹H⁺) is used as an absorbing material, hydrogen ions (¹H⁺) are in principle eluted in heavy water (²H₂O, or ²H¹HO) that is a treatment object. Accordingly, it was impossible for the absorbing material (chemical composition: HₓMn₂O₄) described in WO 2015/037734 to separate tritium from high purity heavy water (for example, 99.9% ²H₂O) containing almost no hydrogen ions (¹H⁺) while maintaining the purity. Further, as described in a literature of Hideki Koyanaka and Hideo Miyatake, "Extracting tritium from water using a protonic manganese oxide spinel", Separation Science and Technology, 50, 14, 2142-2146, (2015), and in WO 2015/037734, in a technique in which an absorbing material is suspended as powder in light water containing tritium, it is possible to temporarily lower the tritium concentration in the light water, but it has been impossible to recover the tritium outside the reaction system at the same time while continuously lowering the tritium concentration in the light water. Furthermore, recently, a technique in which the tritium concentration in light water is continuously lowered has been reported in Hideki Koyanaka, and Yasuhito Isozumi: "Separation and recovery of tritium in water using a manganese oxide electrode film", 83rd Meeting of The Electrochemical Society of Japan, Presentation number: 3Q29 (2016), but it has not been disclosed at all whether or not the tritium (³H) dissolved in heavy water (²H₂O, or ²H¹HO) can be separated by the technique.

### Summary of Invention

### Technical Problem

It is technically difficult to separate tritium (³H) from heavy water (²H₂O, or ²H¹HO) rather than to separate tritium from light water (¹H₂O). This is because deuterium (²H) is an element closer to tritium (³H) rather than to hydrogen (¹H) on the periodic table, and has more similar physical and chemical properties to those of tritium. In addition, in the following, in order to simplify the description of element symbols, tritium (³H), deuterium (²H), and hydrogen (¹H) are described T, D, and H, respectively. Further, the ions of T, D, and H are described T⁺, D⁺, and H⁺, respectively. Furthermore, with respect to isotopomers of a water molecule, ³H₂O, ²H₂O, ²H³HO, ²H¹HO, and ¹H₂O are described as T₂O, D₂O, DTO, DHO, and H₂O, respectively. With respect to isotopomers of hydrogen gas, ³H₂, ²H₂, ²H³H, ²H¹H, and ¹H₂ are described as T₂, D₂, DT, DH, and H₂, respectively.

In modern society, the technique to separate with high efficiency and inexpensively tritium (T) dissolved as an isotopomer of water DTO in heavy water (D₂O, or DHO) is a technique indispensable for development and operation of a nuclear fusion reactor using deuterium (D) and tritium (T) in a large amount as a fuel. For example, Yamanishi, and others: "Developments of Water Detritiation Systems in a Fusion Reactor", J. Plasma Fusion Res. Vol. 83, No. 6 (2007) 545-559, can be mentioned as reference document.

Accordingly, it is required to realize an inexpensive absorbing material with which tritium (T) at a low concentration dissolved as an isotopomer of water (DTO) in heavy water at a high concentration (for example, 99.9% D₂O) can be separated with high efficiency.

The present invention has been made in view of the situation as described above, and an object of the present invention is to provide an absorbing material capable of inexpensively separating and recovering tritium (T) from high purity heavy water by using a manganese oxide absorbing material, and a method for separating and recovering tritium.

### Solution to Problem

In order to solve the problem described above the invention provides the use of a tritium absorbing material comprising a deuterium ion- or hydrogen ion-containing manganese oxide having a spinel-type crystal structure in a method for collecting tritium from heavy water containing tritium.

The tritium absorbing material of the said use according to the present invention is a tritium absorbing material that separates and recovers tritium (T) from heavy water (D₂O, or DHO) at a high concentration containing tritium (T), and is characterized by being constituted of a deuterium ion (D⁺)-containing manganese oxide having a spinel-type crystal structure, or a hydrogen ion (H⁺)-containing manganese oxide having a spinel-type crystal structure.

In another aspect, the present invention provides a tritium absorbing material for collecting tritium from heavy water containing tritium, comprising:
a deuterium ion-containing manganese oxide having a spinel-type crystal structure.

In a further aspect, the invention provides a method for separating and recovering tritium from heavy water, wherein
powder or a constituent from powder of a tritium absorbing material comprising a deuterium ion- or hydrogen ion-containing manganese oxide having a spinel-type crystal structure is supported on a conductive porous material to form an electrode film, one side surface of the electrode film is coated with a hydrogen ion conducting material, deuterium ions or hydrogen ions are given to the surface of the electrode film coated with the hydrogen ion conducting material, and heavy water containing tritium is brought into contact with a surface of the electrode film not coated with a hydrogen ion conducting material.

In the method for separating and recovering tritium from heavy water as mentioned above, it is preferred that the electrode film is constituted by dividing into a portion to capture tritium while being immersed in heavy water containing tritium, and a portion to transpire the captured tritium in a gas phase as an isotopomer of water.

Furthermore in said method it is preferred that the pH of heavy water containing tritium to be brought into contact with the tritium absorbing material is adjusted to 4 or more to 10 or less, and the tritium is captured in the tritium absorbing material from the heavy water, and the pH of the heavy water containing tritium is adjusted to 3 or less, and the tritium captured in the tritium absorbing material is released as the isotopomer of water.

Moreover, in said method it is preferred that elution of manganese from a tritium absorbing material is prevented by adding lithium ions to heavy water containing tritium to be brought into contact with the tritium absorbing material

In addition, a method for separating and recovering tritium of the present invention is characterized in that heavy water containing tritium is brought into contact with the tritium absorbing material, and the tritium in the heavy water is separated and recovered into the tritium absorbing material; or by utilizing a catalyst effect of the tritium absorbing material, tritium is selectively absorbed in the tritium absorbing material, and converted to an isotopomer of a water molecule to be released from heavy water.

Further, a method for separating and recovering tritium of the present invention is characterized in that powder of the tritium absorbing material is sintered and fixed on a surface of a conductive material such as a metal and a carbon material by using a conductive coating material to obtain an electrode of a porous body, further a hydrogen ion conducting material is fixed on one side of the electrode to form an electrode film, and a reaction system capable of continuously giving deuterium ions or hydrogen ions through the hydrogen ion conducting material to the electrode of a porous body is used.

Furthermore, a method for separating and recovering tritium from heavy water of the present invention is characterized in that when tritium is absorbed and separated in the tritium absorbing material from heavy water, pH of the heavy water containing tritium is adjusted from alkaline to weak acidity, and when tritium is transpired in a gas phase and recovered as an isotopomer of a water molecule from the tritium absorbing material, pH of the heavy water containing tritium is adjusted to acidity. Moreover, a method for separating and recovering tritium from heavy water of the present invention is characterized in that tritium is transpired in a gas phase in a reaction vessel, and then when pH of the heavy water containing tritium is again adjusted from acidity to weak acidity or to alkaline, by adding lithium ions (Li⁺) to the heavy water containing tritium in advance, manganese contained in the tritium absorbing material is prevented from being eluted.

### Advantageous Effects of Invention

According to the present invention, tritium can be separated inexpensively from heavy water.

### Brief Description of Drawings

Fig. 1 shows concentration changes of tritium in heavy water by deuterium ion-containing manganese oxide absorbing material powder.
Fig. 2 shows concentration changes of tritium in heavy water by hydrogen ion-containing manganese oxide absorbing material powder.
Fig. 3(a) is a schematic diagram of the experiment system in which tritium is separated and recovered from heavy water by using an electrode film on which tritium absorbing material powder is supported. Fig. 3(b) is a schematic diagram showing a cross-section and a mechanism of reaction of the experiment system.
Fig. 4(a) shows concentration changes of tritium in heavy water by an electrode film containing deuterium ion-containing manganese oxide absorbing material powder. Fig. 4(b) shows concentration changes of tritium recovered in ultrapure water.
Fig. 5(a) shows concentration changes of tritium in heavy water by an electrode film containing hydrogen ion-containing manganese oxide absorbing material powder. Fig. 5(b) shows concentration changes of tritium recovered in ultrapure water.

### Description of Embodiments

A tritium absorbing material of the present invention is constituted of a deuterium ion-containing manganese oxide having a spinel-type crystal structure (theoretical composition ratio based on crystallography is DₓMn₂O₄, and 0 < x ≤ 1), or a hydrogen ion-containing manganese oxide (theoretical composition ratio based on crystallography is HₓMn₂O₄, and 0 < x ≤ 1). Herein, the term "constitute" means that the deuterium ion-containing manganese oxide or the hydrogen ion-containing manganese oxide is essentially contained in order to realize the action effect of the present invention, and also means that other than the above, various kinds of components to be added in order to keep the form, stability, may be contained as a part of the constitution.

The synthesis and properties of a deuterium ion-containing manganese oxide having a spinel-type crystal structure have been reported, for example, in Ammundsen, B.; Jones, D J.; Roziere, J.; Berg, H.; Tellgren, R.; Thomas, J. O., Ion exchange in manganese dioxide spinel: proton, deuteron, and lithium sites determined from neutron powder diffraction data, Chem. Mater. 1998, 10, 1680-1687. Further, the hydrogen ion-containing manganese oxide having a spinel-type crystal structure has been reported, for example, in H. Koyanaka, O. Matsubaya, Y. Koyanaka, and N. Hatta, Quantitative correlation between Li absorption and H content in Manganese Oxide Spinel λ-MnO2, Journal of Electroanalytical Chemistry 559 (2003) 77-81. The deuterium ion-containing manganese oxide having a spinel-type crystal structure (DₓMn₂O₄), and the hydrogen ion-containing manganese oxide having a spinel-type crystal structure (HₓMn₂O₄), which have been studied in the reports described above, respectively, are synthesized by using a lithium ion-containing manganese oxide having a spinel-type crystal structure (LiₓMn₂O₄) as a precursor. For example, the synthesis can be performed by the following methods.

The lithium ion-containing manganese oxide having a spinel-type crystal structure can be obtained, for example, through the processes of mixing, firing, and purifying by using a drug including a carbonate of manganese such as manganese carbonate, and a hydrate of manganese carbonate, a hydroxide of lithium, as a raw material. The deuterium ion-containing manganese oxide having a spinel-type crystal structure, and the hydrogen ion-containing manganese oxide can be obtained further through a process of an acid treatment in addition to the processes described above.

In the mixing process, for example, the raw material powder described above is mixed at room temperature. At this time, the mixing is performed until the mixture is blackened. According to this, a crystal nucleus of the lithium ion-containing manganese oxide having a spinel-type crystal structure is generated. In the firing process, the nucleus generated in the mixing process is grown. For example, a mixture is heated at a temperature of 200°C to 1000°C, preferably 300°C to 500°C, and more preferably 350°C to 450°C for 1 to 10 hours in the atmospheric air. In the purifying process, a fired material obtained in the firing step is suspended in weak alkaline distilled water, and then the resultant suspension is left to stand for a certain period of time, and the precipitate is recovered. This precipitate is a lithium ion-containing manganese oxide having a spinel-type crystal structure. In a case where the lithium ion-containing manganese oxide having a spinel-type crystal structure is stored, the precipitate recovered by a filtration treatment is stored in a cool and dark place. Further, when a drying treatment of the lithium ion-containing manganese oxide having a spinel-type crystal structure is required, the drying treatment can be performed at around 100 to 150°C in the atmospheric air. Next, when a deuterium ion-containing manganese oxide, or a hydrogen ion-containing manganese oxide is synthesized through the process of an acid treatment, the lithium ion-containing manganese oxide powder having a spinel-type crystal structure is suspended in an acid aqueous solution containing deuterium (D) such as a deuterium chloride (DCI) aqueous solution, or in an acid aqueous solution containing hydrogen (H) such as a hydrochloric acid (HCI) aqueous solution, and stirred for around several hours. Subsequently, the resultant suspension is separated into solid and liquid, and deuterium ion-containing manganese oxide powder, or hydrogen ion-containing manganese oxide powder is obtained. The obtained deuterium ion-containing manganese oxide powder having a spinel-type crystal structure, or the hydrogen ion-containing manganese oxide powder having a spinel-type crystal structure is stored in a cool and dark place in a wet state. The powder should not be subjected to a heat drying treatment. The reason for this is that reaction in which deuterium ions or hydrogen ions in a crystal structure are transpired as a water molecule from the crystal proceeds by a heat drying treatment, and the crystal structure of an absorbing material is changed to a crystal structure of lambda manganese dioxide not containing ion-exchangeable deuterium ions or hydrogen ions, as a result of which, the absorbability for tritium ions in water, which is shown by the absorbing material, is reduced. This phenomenon has been reported in a literature of H. Koyanaka, O. Matsubaya, Y. Koyanaka, and N. Hatta, Quantitative correlation between Li absorption and H content in Manganese Oxide Spinel λ-MnO2, Journal of Electroanalytical Chemistry 559 (2003) 77-81.

The deuterium ion-containing manganese oxide having a spinel-type crystal structure (DₓMn₂O₄), or the hydrogen ion-containing manganese oxide having a spinel-type crystal structure (HₓMn₂O₄) obtained from the above-described series of processes constitutes a tritium absorbing material. Of course, the deuterium ion-containing manganese oxide having a spinel-type crystal structure, or the hydrogen ion-containing manganese oxide having a spinel-type crystal structure, which is synthesized by a method other than the method described above, also constitutes a tritium absorbing material.

In the deuterium ion-containing manganese oxide having a spinel-type crystal structure, or the hydrogen ion-containing manganese oxide having a spinel-type crystal structure, from the viewpoint of the absorption ability to tritium, the particle diameter of the primary particles is preferably in the range of 20 to 70 nm. In order to obtain the particle diameter within the range, the firing temperature is suitably set in the range of 350°C to 450°C in the firing process described above.

A tritium absorbing material of the present invention is a simple chemical separation measure at room temperature, in which a complicated reaction apparatus is not required, and addition of energy such as heat or electricity is not required, either, and is inexpensive, as compared with a conventional separation technique of tritium (T) by utilizing the slight difference of physical properties between isotopomers (T₂, D₂, H₂, DT, DH, HT, T₂O, D₂O, DTO, DHO, and H₂O) as a hydrogen gas or a water molecule. Accordingly, for example, by constructing a circulation system that is, while circulating heavy water containing tritium, which is a treatment object and is retained in a surge tank, between the surge tank and an absorption tank in which the heavy water is brought into contact with the present absorbing material, the tritium concentration is monitored by using an existing flow-type liquid scintillation counter with which radioactive concentration can be monitored in real time, and the heavy water that is a treatment object is discharged at the time point when the tritium concentration is lowered, but when the concentration is not sufficiently lowered, the heavy water that is a treatment object is returned to the surge tank, tritium can be separated from the heavy water with high efficiency and inexpensively.

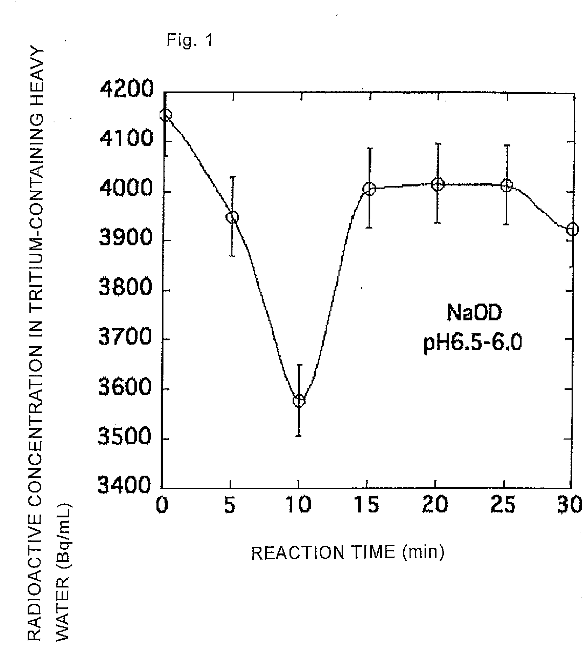

It is considered that an absorption mechanism of tritium by a tritium absorbing material of the present invention is based on the absorption of the tritium ions (T⁺) generated from a selective oxidative decomposition reaction (OT⁻ → T⁺ + 2e⁻ + (1/2)O₂) of the hydroxide ions containing tritium (OT⁻), which generates on a surface of the present absorbing material. In general, the ionization degree of water molecules is extremely low, therefore, the tritium in heavy water is present mostly as a water molecule (DTO) but not as an ion. The present absorbing material absorbs the T⁺ generated by an oxidative decomposition reaction of OT⁻ in a crystal by a reaction in which the T⁺ is ion-exchanged with the D⁺ or H⁺ contained in the crystal of the absorbing material, in the heavy water containing tritium, and decreases the tritium concentration in the heavy water. The decrease of the tritium concentration based on an oxidative decomposition reaction of OT⁻ in the heavy water promotes a dissociation reaction of water molecules so as to replenish the OT⁻ in the heavy water (for example, DTO → D⁺ + OT⁻, HTO → H⁺ + OT⁻, and T₂O → T⁺ + OT⁻). Further, it is considered that a reaction is promoted so that the tritium ions (T⁺) being present in heavy water also replenish the OT⁻ in the heavy water via the changing to DTO (for example, T⁺ + OD⁻ → DTO → D⁺ + OT⁻). According to these results, it is considered that by applying the present absorbing material, an effect of decreasing the concentration of all the chemical species containing the tritium (T⁺, OT⁻, T₂O, DTO, and HTO) that are present in heavy water can be obtained. Practically, in a result (Fig. 1) of Example 1 described later, a tritium absorbing material in a powder state is applied to the tritium at an extremely low concentration (several tens of nanograms of tritium per liter of heavy water) contained in heavy water at a high concentration (99.9%), and as a result, around 14% of the initial content of the tritium contained in the heavy water that has been subjected to experiment is absorbed and separated. In addition, in Example 3, as a result of processing and applying the tritium absorbing material in a powder state to an electrode film, continuous decrease of the tritium concentration is observed in heavy water, and at the same time, simple recovery of the tritium is also realized.

It is considered that a tritium absorbing material including a deuterium ion-containing manganese oxide having a spinel-type crystal structure (DₓMn₂O₄) of the present invention can separate and recover tritium from heavy water based on the chemical reactions described in the chemical formulas (1) to (4) shown in the following. Further, by replacing the chemical symbol D with H in the chemical formulas (1) to (4), the chemical formulas can be changed to chemical formulas in a case of using a hydrogen ion-containing manganese oxide having a spinel-type crystal structure (HₓMn₂O₄) as a tritium absorbing material. Herein, x and y in each chemical formula represent a mole ratio between the chemical species. Furthermore, the symbol "□" represents an empty adsorption seat in a state that a tritium ion (T⁺) is missing in the crystal structure.
[Chemical Formula 1]

LiₓMn₂O₄ + x D⁺ → (D⁺, e⁻)ₓMn₂O₄ + x Li⁺ (1)

(D⁺, e⁻)ₓMn₂O₄ + y OT⁻ → (D⁺, e⁻)_{x-y}(T⁺, e⁻)_{y}Mn₂O₄ + y(2e⁻) + yD⁺ + y(1/2 O₂) (2)

(D⁺, e⁻)_{x-y}(T⁺, e⁻)_{y}Mn₂O₄ + y(2e⁻) + y D⁺ → (D⁺, e⁻)_{x-y} (□, e⁻)_{y}Mn₂O₄ + y DT (3)

(D⁺, e⁻)ₓ Mn₂O₄ + y OT⁻ → (D⁺, e⁻)_{x-y} (□, e⁻)_{y} Mn₂O₄ + y DTO (4)

The chemical formula (1) shows a reaction in which by performing an acid treatment of a lithium ion-containing manganese oxide having a spinel-type crystal structure (LiₓMn₂O₄) using dilute deuterium chloride obtained by diluting deuterium chloride (DCI) with heavy water (D₂O), lithium ions are ion-exchanged with deuterium ions, and as a result, a deuterium ion-containing manganese oxide (DₓMn₂O₄) is obtained. With regard to the ion exchange reaction, the following literature describes in detail. Ammundsen, B.; Jones, D J.; Roziere, J.; Berg, H.; Tellgren, R.; Thomas, J. O., Ion exchange in manganese dioxide spinel: proton, deuteron, and lithium sites determined from neutron powder diffraction data, Chem. Mater. 1998, 10, 1680-1687. In the above-described chemical formulas (1) to (4), the (DₓMn₂O₄) has been described as (D⁺, e⁻)ₓ Mn₂O₄. This is because it is clarified that a hydrogen ion (H⁺) that has entered a crystal structure of a manganese oxide having a spinel-type crystal structure forms a weak covalent bond (can also be said to be a strong hydrogen bond) with a pair of oxygen atoms in the crystal in the following literature. H. Koyanaka, Y. Ueda, K. Takeuchi, A. I. Kolesnikov, "Effect of crystal structure of manganese dioxide on response for electrolyte of a hydrogen sensor operative at room temperature", Sens. Act. B 2013, 183, 641-647.

In the literature, it was experimentally proved that hydrogen ions forming a weak covalent bond are easily conducted in a crystal due to an effect of weakening a binding force by oxygen ions as compared with hydrogen ions bound with a strong covalent bond to oxygen ions. Further, the description of (D⁺, e⁻)ₓ shows that deuterium in the crystal coexists in a state close to a deuterium atom with high electron (e⁻) sharing between the deuterium and an oxygen ion, and in a state close to a deuterium ion with low electron (e⁻) sharing between the deuterium and an oxygen ion, that is, deuterium is present in an intermediate state of an atom and an ion. The presence of deuterium ions forming such a weak covalent bond increases a probability that oxygen ions that are partners to form a bond are present in a state that the electrons are attracted to the deuterium ions. As a result, it is expected that the oxygen ions improve the performance as an oxidizing agent for taking electrons from the outside. Due to the improvement of the performance as the oxidizing agent, it is considered that the present absorbing material functions as a catalyst that oxidatively decomposes OT⁻. Furthermore, it has been reported that in a crystal structure of a metal oxide, when hydrogen ions and a pair of oxygen atoms form a weak covalent bond (strong hydrogen bond), the interatomic distance (d: O-O) between the oxygen atoms constituting the crystal plays an important role, in the following literature. E. Libowitzky, Correlation of O-H Stretching Frequencies and O-H ··· O hydrogen bond lengths in minerals. Monatshefte fur Chemie. 130, 1047-1059 (1999). In a spinel-type crystal structure of a manganese oxide, which constitutes a tritium absorbing material of the present invention, there is an oxygen tetrahedral group constituted by a pair of oxygen atoms having an interatomic distance of 2.57 to 2.60 Å. Therefore, according to Fig. 1 shown in the literature, it can be understood that the tritium absorbing material of the present invention is a material with which hydrogen ions entered from the outside can be captured by a pair of oxygen atoms constituting the oxygen tetrahedron with a weak covalent bond (strong hydrogen bond).

Further, with regard to the description of (D⁺, e⁻)ₓ, also to a gamma-type manganese dioxide having a different crystal structure from a spinel-type crystal structure, there is the following study in which hydrogen ions and electrons are treated as a couple. H. Kahil, Introduction to the dynamic theory of the (H+, e-) couple insertion in γ-MnO2. J. Solid. State Electrochem. 4, 107-120, (2000).

The chemical formula (2) shows a reaction in which with the progress of an oxidative decomposition reaction to OT⁻ in heavy water, deuterium ions (D⁺) contained in a spinel-type crystal structure of a manganese oxide are ion-exchanged with the tritium ions (T⁺) generated from the oxidative decomposition of OT⁻ in the heavy water, and captured in the spinel-type crystal as T⁺. In the chemical formula (2), there is OT⁻ on the left side, and there is D⁺ on the right side, therefore, it suggests that the reaction actively progresses in an alkaline state at a high abundance ratio of hydroxide ions. This supports the experimental result in which the decrease of tritium concentration is not observed at all in a case where the present absorbing material is applied to tritium-containing heavy water with strong acidity (for example, pH 1 to 3).

Next, the chemical formula (3) shows a reaction in which tritium is released as an isotopomer (DT) of a hydrogen gas from the tritium absorbing material (D⁺, e⁻)_{x-y} (T⁺, e⁻)_{y} Mn₂O₄ of the present invention which has absorbed tritium. There is D⁺ on the left side of the chemical formula, therefore, it is considered that the reaction proceeds well under an acidic condition. The generated DT is reacted with the oxygen (1/2O₂) shown on the right side of the chemical formula (2), or the oxygen contained in a gas in a headspace of a reaction vessel, and is changed to an isotopomer (DTO) of a water molecule.

The chemical formula (4) shows an apparent overall reaction obtained by summing the chemical formulas (2) and (3), and shows that DTO is generated as a product from the series of chemical reactions. Further, the symbol "□" described on the right sides of the chemical formulas (3) and (4) represents an empty adsorption seat immediately after the release of T⁺. In the actual spinel-type crystal structure, it is pointed out that the adsorption seat corresponds to an oxygen tetrahedron constituted by a pair of oxygen atoms that has an interatomic distance of 2.57 to 2.60 Å enabling weak covalent bonding, in the following literature. H. Koyanaka, Y. Ueda, K. Takeuchi, A. I. Kolesnikov, "Effect of crystal structure of manganese dioxide on response for electrolyte of a hydrogen sensor operative at room temperature", Sens. Act. B 2013, 183, 641-647.

In addition, as a cause of preferentially generating the oxidative decomposition reaction to OT⁻ rather than the oxidative decomposition reaction to OD⁻ or OH⁻ by the present absorbing material, it is mentioned that the mass or volume of a tritium ion (T⁺) is larger than the mass or volume of a deuterium ion (D⁺) or a hydrogen ion (H⁺), therefore, the diffusion rate of T⁺ is lowered as compared with D⁺ or H⁺ in the crystal, and the T⁺ easily stays in the crystal. Further, it is expected that in the crystal, the frequency when the T⁺ is bound to a pair of oxygen atoms while vibrating by a weak covalent bond is lower than the frequency when the D⁺ or H⁺ is similarly bound to a pair of oxygen atoms by a weak covalent bond. Accordingly, the tritium weakly covalently bonded to a pair of oxygen atoms in the crystal keeps the state of tritium ions (T⁺) in which electron sharing with a pair of oxygen atoms is lowered longer than that of deuterium ions (D⁺) or hydrogen ions (H⁺). According to these results, it is considered that in a crystal of an absorbing material of the present invention, the reactivity of T⁺ is high, the T⁺ is easily reacted with an electron, D⁺, or O, and easily forms DT or DTO that is a product in the above-described chemical formulas (2) to (4). Accordingly, it is expected that the oxidative decomposition reaction of OT⁻, in which tritium (T) is involved, preferentially proceeds rather than the oxidative decomposition reaction in which deuterium (D) or hydrogen (H) is involved.

Further, in the present invention, it has been found that when pH of heavy water is again adjusted from acidity to alkaline by adding an alkaline reagent, by adding lithium ions to the heavy water in advance so that the proportion does not exceed 30 mg per gram of the tritium absorbing material, and the concentration in heavy water is around 10 mg/L, the phenomenon in which manganese ions (Mn²⁺) are eluted in the heavy water from the present tritium absorbing material having empty adsorption seats can be prevented. This leads to the suppression of generating sludge having as the main component precipitates of hydroxides derived from the manganese ions eluted in the heavy water, in a process of separating and recovering tritium in the heavy water while repeatedly adjusting the pH, and an effect of prolonging a lifetime of the present absorbing material can also be expected.

As described above, in a reaction system of the present invention, the tritium dissolved in heavy water mainly as DTO is once taken as an ion in the crystal through an oxidative decomposition reaction of OT⁻ by a tritium absorbing material when the pH of heavy water is weak acidity to alkaline, and further is released as DTO in a gas phase when the pH of heavy water is acidity. According to this, in a case where a tritium absorbing material in a powder state of the present invention is simply suspended in the heavy water containing tritium, of which the pH has been adjusted to weak acidity to alkaline, the tritium in the heavy water is once taken as a tritium ion (T⁺) in a crystal of the tritium absorbing material, and the tritium concentration in the heavy water is temporarily lowered. However, the taken tritium is eluted again as DTO from the tritium absorbing material into the heavy water. Accordingly, in the results of Examples 1 and 2 described later, it is considered that the tritium concentration in heavy water is once lowered, and then again increased up to near the initial concentration.

In order to suppress the re-elution of the tritium, and to be able to recover the tritium outside the reaction system, it is considered that in a tritium separation and recovery system using an electrode film containing a tritium absorbing material powder of the present invention, a design is made to distinguish in a reaction vessel a position of the electrode film, which is immersed in heavy water to absorb tritium from a position of the electrode film, which is exposed to a gas in a headspace in the reaction vessel to release the tritium. According to this, it is considered that an effect in which DTO is concentrated in the position of the electrode film, which is exposed to a gas in a headspace in the reaction vessel, and the tritium concentration in the position becomes higher than the tritium concentration in heavy water can be obtained. As a result, in the present invention, the tritium separated from heavy water can be recovered in a small amount of a medium. That is, in the results of Examples 3 and 4, the gas in a headspace of a reaction vessel is force-fed by an air pump to be introduced in a small amount of light water (H₂O) having high solubility to DTO, and the tritium is separated from the heavy water, and concentrated and recovered in a small amount of the light water.

Next, a method for separating and recovering tritium from heavy water of the present invention will be explained.

As is apparent also from the technical matters described above, the separation and recovery method of the present invention is characterized as described above in that powder or a constituent from powder of the tritium absorbing material is brought into contact with heavy water containing tritium, and the tritium is collected from the heavy water. Herein, the expression "powder or a constituent from powder" means that, for example, the powder having the above-described particle diameter is used as the basis, and an aggregate or an accumulated body to the acceptable extent of the powder may be used. The aggregate or accumulated body in this case includes also a combination with a carrier or support of other kinds of metals, ceramics, and resins.

Accordingly, the tritium absorbing material of the present invention may be in a film state such as a porous film, and an electrode film, or may have an arbitrary shape, as the external form.

In the method for separating and recovering tritium of the present invention, based on the above, the embodiment can be variously considered.

For example, experimentally, the following matters are confirmed.

At first, experimentally, the heavy water containing tritium is prepared using commercially available reagents. The pH of the heavy water is adjusted by an alkaline reagent (for example, NaOD aqueous solution) to a value suitable for absorption of tritium by the absorbing material of the present invention, preferably 4 or more to 10 or less, for example, pH 6 to 9. By this pH adjustment, tritium is absorbed in the crystal of the absorbing material from the heavy water containing tritium, and the tritium concentration in the heavy water can be decreased.

In the present embodiment, it is extremely important to control the pH of the heavy water for effectively utilizing a tritium absorbing material. Specifically, in order to effectively separate the tritium from heavy water by bringing the deuterium ion-containing manganese oxide (DₓMn₂O₄), or the hydrogen ion-containing manganese oxide (HₓMn₂O₄) as powder into contact with the heavy water containing the tritium, the pH of the heavy water containing tritium is adjusted to more preferably 5 or more to less than 7. Further, in a case where the present absorbing material powder is processed to and used for an electrode having an discharge property (described in WO 2015/037734), or an electrode film (described in Japanese Patent Application No. 2015-095277), it is desired to adjust the pH of the heavy water containing tritium to preferably 5 or more to less than 10, and to keep the pH at more preferably 5.5 or more to 9.5 or less. This is because in a case where the pH of the heavy water containing tritium is, for example, 1 to 3 of strong acidity, the absorption of tritium for an absorbing material (DₓMn₂O₄, or HₓMn₂O₄) is hardly generated, and in a case where the pH is 10 or more of strong alkaline, the dissolution of manganese itself that constitutes the absorbing material becomes remarkable.

In addition, the heavy water containing tritium that has been brought into contact with the tritium absorbing material may also be circulated so as to be brought into contact with the tritium absorbing material again. Herein, by using a flow-type liquid scintillation counter, the radioactive concentration derived from the tritium in the heavy water containing tritium is measured all the time, and in a case where the tritium concentration is not decreased to the target concentration value, the circulation of the heavy water containing tritium is continued so as to repeatedly bring the heavy water containing tritium into contact with the tritium absorbing material. According to this, tritium can be separated and recovered from heavy water with high efficiency and inexpensively.

In fact, in the present invention, it was confirmed that by using a deuterium ion-containing manganese oxide having a spinel-type crystal structure (DₓMn₂O₄), or a hydrogen ion-containing manganese oxide having a spinel-type crystal structure (HₓMn₂O₄) described in WO 2015/037734 as an absorbing material, tritium can be separated from high purity heavy water (99.9%). Further, an electrode containing powder of a deuterium ion-containing manganese oxide (DₓMn₂O₄), or a hydrogen ion-containing manganese oxide (HₓMn₂O₄) described in WO 2015/037734 is prepared. Furthermore, one side of the electrode is coated with a hydrogen ion conductive film and processed to an electrode film, and the electrode film is placed in a reaction vessel. In the reaction vessel, deuterium ions or hydrogen ions are given to the electrode film from the outside through the hydrogen ion conductive film with which one side of the electrode film is coated. By the giving of deuterium ions or hydrogen ions, continuous decrease of the tritium concentration is realized, which cannot be obtained in a case of applying the absorbing material as powder to the heavy water containing tritium.

Furthermore, a portion to absorb tritium by immersing the electrode film in heavy water, and a portion to release the tritium by exposing the electrode film to a gas in a headspace in the reaction vessel are separately provided, and by introducing the gas in a headspace of the reaction vessel in a small amount of a medium (for example, H₂O) having high solubility to DTO, the tritium is concentrated in the small amount of a medium, and recovered from the heavy water.

Hereinafter, the present invention is explained in more detail by referring to Examples, however, the present invention is not limited at all by these Examples.

### Examples

### [Example 1]

### [Separation of tritium from heavy water using tritium absorbing material powder constituted of deuterium ion-containing manganese oxide having spinel-type crystal structure]

### 1: Synthesis of tritium absorbing material powder constituted of deuterium ion-containing manganese oxide having spinel-type crystal structure

In accordance with the following procedures, a tritium absorbing material constituted of deuterium ion-containing manganese oxide powder having a spinel-type crystal structure was synthesized. <Raw material and mixing> Powders of manganese carbonate hydrate (MnCO₃·nH₂O) and lithium hydroxide hydrate (LiOH·H₂O), which are reagents manufactured by Wako Pure Chemical Industries, Ltd., were mixed at a weight ratio of 2 : 1, and the resultant mixture was mixed well at room temperature until being blackened. <Firing> By using an electric furnace (FO-410 manufactured by YAMATO), the mixed powder was heated at 390°C for 6 hours in the atmospheric air in a state of being placed in a crucible made of alumina, and then cooled down to room temperature.

<Purifying> The powder after natural cooling in an amount of 10 g was suspended in 1 L of distilled water in a glass beaker, and by irradiating the suspension with ultrasonic waves through the wall surface of the beaker, the aggregation of the powder was loosened. Unreacted manganese carbonate (MnCO₃) has a low specific gravity, therefore, remained turbid in the supernatant of the distilled water, and a lithium ion-containing manganese oxide having a spinel-type crystal structure (LiₓMn₂O₄) with a heavy specific gravity precipitated at the bottom of the container. After the resultant suspension was left to stand for one hour, manganese carbonate in the supernatant was removed by using an aspirator and the precipitated lithium ion-containing manganese oxide powder having a spinel-type crystal structure was recovered. In this purifying process, the pH of the distilled water in which powder had been suspended was maintained to be weakly alkaline to alkaline. By repeating the series of purifying treatment twice, manganese carbonate which remained as an unreacted substance in the firing process was removed.

<Drying> Lithium ion-containing manganese oxide powder having a spinel-type crystal structure, which had been recovered by a filtration treatment was subjected to a drying treatment at around 120°C for 12 hours. According to the present synthesis method, 5 g of lithium ion-containing manganese oxide (LiₓMn₂O₄) powder was obtained.

<Acid treatment> A lithium ion-containing manganese oxide having a spinel-type crystal structure in an amount of 0.5 g was suspended in 45 mL of a heavy aqueous solution of deuterium chloride at a concentration of 0.55 M, which had been prepared by diluting deuterium chloride (DCI 35% in D₂O 99.5%, manufactured by Sigma-Aldrich Co. LLC.) with heavy water (042-26842 D₂O 99.9%, manufactured by Wako Pure Chemical Industries, Ltd.), and the resultant suspension was continuously stirred for around one hour using a stirring bar and a magnetic stirrer coated with Teflon (registered trademark) resin. Deuterium ion-containing manganese oxide powder having a spinel-type crystal structure was recovered in a wet state on glass fiber filter paper (GS-25 manufactured by ADVANTEC MFS, Inc.) from the suspension by reduced pressure. The chemical composition of the deuterium ion-containing manganese oxide obtained by the series of operation can be estimated by referring to H. Koyanaka, O. Matsubaya, Y. Koyanaka, and N. Hatta, Quantitative correlation between Li absorption and H content in Manganese Oxide Spinel λ-MnO2, Journal of Electroanalytical Chemistry 559 (2003) 77-81. That is, in the literature, the lithium ion-containing manganese oxide synthesized by a technique similar to the present invention is subjected to an acid treatment with a dilute hydrochloric acid aqueous solution at a concentration of 0.5 M in the similar manner, and a hydrogen ion-containing manganese oxide (H_{1.35}Mn₂O_{4.1}) is obtained. Accordingly, also in the present invention, the lithium ion-containing manganese oxide synthesized by the same synthesis technique as that in the literature was subjected to an acid treatment with a deuterium chloride aqueous solution at a concentration of 0.55 M, and a deuterium ion-containing manganese oxide was obtained, and therefore, it is considered that the chemical composition of the deuterium ion-containing manganese oxide has a chemical composition (D_{1.35}Mn₂O_{4.1}) similar to the chemical composition (H_{1.35}Mn₂O_{4.1}) of the hydrogen ion-containing manganese oxide described in the literature.

According to the operation described above, a tritium absorbing material constituted of a deuterium ion-containing manganese oxide having a spinel-type crystal structure with a primary particle diameter of 20 to 70 nm was obtained.

### 2: Separation test of tritium from heavy water using deuterium ion-containing manganese oxide powder having spinel-type crystal structure

### <Preparation of tritium-containing heavy water for experiment

Tritium-containing heavy water having a radioactive concentration of 4154.95 Bq/mL was prepared in a glass beaker by diluting 6.91 µL of a standard reagent of tritiated water (³H, water, manufactured by PerkinElmer, Inc.) with 90 mL of heavy water (042-26841 D₂O 99.9%, manufactured by Wako Pure Chemical Industries, Ltd.) at room temperature. Accordingly, in 90 mL of the tritium-containing heavy water for experiment, 373945.5 Bq of tritium was contained as the total amount. For the measurement of radioactive concentration of tritium, a liquid scintillation counter (Liquid Scintillation Analyzer TRI-CARB 2100TR manufactured by PACKARD, USA) was used. As a blank sample, 10.0 mL of a scintillator was added to 1.0 mL of heavy water used for the experiment, the radioactivity derived from the tritium was measured, and 0.25 Bq/mL was detected. According to this, it was confirmed that in the present radioactivity measurement method, 0.25 Bq/mL was the detection lower limit of the radioactive concentration of tritium.

### <Procedure for separation test of tritium from heavy water>

In a separation test of tritium, the deuterium ion-containing manganese oxide powder having a spinel-type crystal structure in a wet state after filtration, which had been obtained by the above-described method, was suspended in 90 mL (22.4°C) of tritium-containing heavy water for experiment having an initial radioactive concentration of 4154.95 Bq/mL, which had been prepared by the above-described method, and the resultant suspension was kept for 30 minutes while being stirred by using a stirring bar and a magnetic stirrer coated with Teflon (registered trademark) resin. In the experiment, the pH of tritium-containing heavy water for experiment was decreased to pH 2.0 immediately after the suspension of the deuterium ion-containing manganese oxide. According to this, a heavy aqueous solution of sodium deuteroxide at a concentration of 0.55 M (prepared by diluting 372072-106 NaOD 40 wt% 99.5 atom% D, manufactured by Sigma-Aldrich Co. LLC. with heavy water, 042-26841 D₂O 99.9%, manufactured by Wako Pure Chemical Industries, Ltd.) was added dropwise in an adequate amount into the suspension, and the pH was maintained at 6.0 to 6.5 during the experiment. Water temperature of the tritium-containing heavy water for experiment was 22.4°C. After the lapses of 5 minutes, 10 minutes, 15 minutes, 20 minutes, 25 minutes, and 30 minutes from the start of the dropwise addition of the heavy aqueous solution of sodium deuteroxide, 1.2 mL of sample of tritium-containing heavy water for experiment was filtrated from the suspension by using a filter paper unit (DISMIC GS-25AS020AN) manufactured by ADVANTEC MFS, Inc., and a disposable syringe (SS-02SZP) manufactured by TERUMO CORPORATION, and to 1.0 mL of the sample precisely weighed and fractionated from 1.2 mL of the sample, 10.0 mL of a surfactant containing a fluorescent agent that emits light with β rays (ULtima Gold manufactured by PerkinElmer, Inc.) was added as a scintillator. In the end, the radioactive concentration was measured by using a liquid scintillation counter. In order to confirm the pH and the water temperature, a pH meter (pH/DO meter, D-55 glass electrode model 9678, manufactured by HORIBA, Ltd.) was used.

### <Test results>

The obtained results were shown in Fig. 1. Fig. 1 shows the radioactive concentration changes of the tritium contained in each sample (1.0 mL) collected at each lapse of time. From the results in Fig. 1, the radioactive concentration of the tritium in 90 mL of heavy water (99.9%) was decreased from the initial concentration of 4154.95 Bq/mL to 3576.23 Bq/mL, that is, decreased by 578.72 Bq/mL from the initial concentration after the lapse of 10 minutes. Accordingly, it was found that in 90 mL of the tritium-containing heavy water for experiment, tritium corresponding to 52084.8 Bq was absorbed to the deuterium ion-containing manganese oxide powder having a spinel-type crystal structure (around 0.5 g on a dry basis) at the reaction time of 10 minutes.

In the present Example, when the deuterium ion-containing manganese oxide powder was synthesized, lithium ion-containing manganese oxide powder was subjected to an acid treatment by using a deuterium chloride aqueous solution, and lithium ions were replaced with deuterium ions. Further, for the pH adjustment of the tritium-containing heavy water for experiment that is a treatment object, a heavy aqueous solution of a reagent NaOD was used. Accordingly, in accordance with the reactions described in the above chemical formulas (1) to (4), when the reaction of separating tritium from heavy water proceeded, deuterium ions (D⁺) were released from an absorbing material into high purity (99.9%) heavy water. According to this, in a case where hydrogen ion-containing manganese oxide powder was utilized as an absorbing material for the tritium contained in heavy water, hydrogen ions (H⁺) were released in heavy water containing tritium, which is a treatment object in principle, and were mixed into the heavy water, and as a result, the purity of the heavy water was lowered. Accordingly, in the present technique in which deuterium ion-containing manganese oxide powder is used as an absorbing material, there is an advantage that tritium (T) can be separated from heavy water without mixing hydrogen ions (H⁺) to the heavy water (D₂O) that is a treatment object.

### [Example 2]

### [Separation of tritium from heavy water using tritium absorbing material powder constituted of hydrogen ion-containing manganese oxide having spinel-type crystal structure]

### 1: Synthesis of tritium absorbing material powder constituted of hydrogen ion-containing manganese oxide having spinel-type crystal structure

In accordance with the following procedures, powder of a tritium absorbing material constituted of a hydrogen ion-containing manganese oxide having a spinel-type crystal structure was synthesized. When lithium ion-containing manganese oxide powder having a spinel-type crystal structure was synthesized, as to <Raw material and mixing>, <Firing>, <Purifying>, and <Drying>, techniques similar to those in Example 1 were used.

<Acid treatment> Lithium ion-containing manganese oxide powder having a spinel-type crystal structure in an amount of 0.5 g was suspended in 100 mL of dilute hydrochloric acid at a concentration of 0.5 M, and the resultant suspension was continuously stirred for around one hour using a stirring bar and a magnetic stirrer coated with Teflon (registered trademark) resin. Next, hydrogen ion-containing manganese oxide powder having a spinel-type crystal structure was recovered in a wet state on glass fiber filter paper (GS-25 manufactured by ADVANTEC MFS, Inc.) from the suspension by reduced pressure. The chemical composition of the hydrogen ion-containing manganese oxide obtained by the present technique is described to be H_{1.35}Mn₂O_{4.1} in H. Koyanaka, O. Matsubaya, Y. Koyanaka, and N. Hatta, Quantitative correlation between Li absorption and H content in Manganese Oxide Spinel λ-MnO2, Journal of Electroanalytical Chemistry 559 (2003) 77-81. According to this, it is considered that the hydrogen ion-containing manganese oxide having a chemical composition similar to that in the literature was obtained by the present acid treatment. According to the operation described above, powder of a tritium absorbing material constituted of a hydrogen ion-containing manganese oxide having a spinel-type crystal structure with a primary particle diameter of 20 to 70 nm was obtained.

### 2: Separation test of tritium from heavy water using hydrogen ion-containing manganese oxide powder having spinel-type crystal structure

### <Preparation of tritium-containing heavy water for experiment>

Tritium-containing heavy water having a radioactive concentration of 3715.9 Bq/mL was prepared in a glass beaker by diluting 40 µL of a standard reagent of tritiated water (1.0 Ci/g 4/25/1985, manufactured by E. I. du Pont de Nemours and Company) with 100 mL of heavy water (042-26841 D₂O 99.9%, manufactured by Wako Pure Chemical Industries, Ltd.) at room temperature (24.1 °C). Accordingly, it was understood that in 100 mL of the tritium-containing heavy water for experiment, 371590 Bq of tritium was contained as the total amount. For the measurement of radioactive concentration of tritium, a liquid scintillation counter (Liquid Scintillation Analyzer TRI-CARB 2100TR, manufactured by PACKARD, USA) was used.

### <Separation procedure of tritium from tritium-containing heavy water for experiment>

In a separation test of tritium, the hydrogen ion-containing manganese oxide powder having a spinel-type crystal structure (around 0.5 g on a dry basis) obtained by the above-described method in a wet state after filtration was suspended in 100 mL (24.1°C) of tritium-containing heavy water for experiment having an initial radioactive concentration of 3715.93 Bq/mL, and the resultant suspension was kept for 30 minutes while being stirred by using a stirring bar and a magnetic stirrer coated with Teflon (registered trademark) resin. At that time, pH of the tritium-containing heavy water for experiment was changed to 3.38 immediately after the suspension of an absorbing material due to an effect of residual dilute hydrochloric acid by an acid treatment. At the time point, an aqueous sodium hydroxide solution (concentration 0.5 M, and 0.1 M NaOH) was started to be added dropwise to the suspension, and the pH of the tritium-containing water for experiment was maintained at 6.0 to 6.5 during the experiment. After the lapses of 5 minutes, 10 minutes, 15 minutes, 20 minutes, 25 minutes, and 30 minutes from the start of the dropwise addition of the aqueous sodium hydroxide solution, 1.2 mL of sample of the tritium-containing heavy water for experiment was filtrated from the suspension by using a filter paper unit (DISMIC-25ASAN) manufactured by ADVANTEC MFS, Inc., and a disposable syringe (SS-02SZP) manufactured by TERUMO CORPORATION. To 1.0 mL of the sample precisely weighed and fractionated from 1.2 mL of the filtrated sample, 10.0 mL of a surfactant containing a fluorescent agent that emits light with β rays (ULtima Gold, manufactured by PerkinElmer, Inc.) was added as a scintillator, and the radioactive concentration of tritium was measured by using a liquid scintillation counter. In order to confirm the pH and the water temperature, a pH meter (pH/DO meter, D-55 glass electrode model 9678, manufactured by HORIBA, Ltd.) was used.

### <Test results>

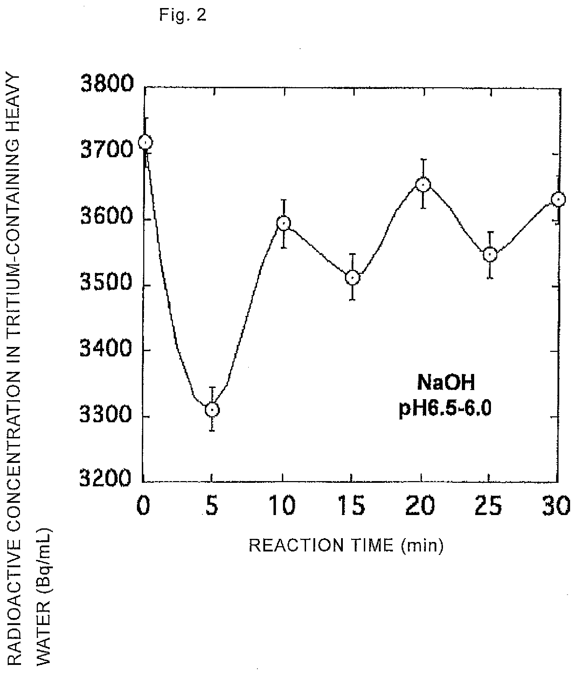

The obtained results were shown in Fig. 2. Fig. 2 shows the radioactive concentration changes of the tritium contained in each sample (1.0 mL) collected at each lapse of time. From Fig. 2, it can be understood that the radioactive concentration by the tritium in the tritium-containing heavy water for experiment was 3311.95 Bq/mL after the lapse of 5 minutes, and most decreased from the initial concentration. The concentration decrease from the initial radioactivity concentration was 403.98 Bq/mL in 1.0 mL of the sample after the lapse of 5 minutes. Accordingly, it was found that in 100 mL of the tritium-containing heavy water for experiment, tritium with a radioactivity of 40398 Bq was absorbed to the hydrogen ion-containing manganese oxide absorbing material powder having a spinel-type crystal structure (around 0.5 g on a dry basis). According to the present experiment, it was found that also in a case where the tritium absorbing material powder constituted of a hydrogen ion-containing manganese oxide having a spinel-type crystal structure was used, tritium was able to be absorbed and separated from the heavy water.

### [Example 3]

### [Separation and recovery of tritium from heavy water using tritium absorption unit containing deuterium ion-containing manganese oxide powder having spinel-type crystal structure]

### 1: Preparation of electrode film containing deuterium ion-containing manganese oxide powder having spinel-type crystal structure

In accordance with the following procedures, an electrode film containing deuterium ion-containing manganese oxide powder having a spinel-type crystal structure was prepared.

When lithium ion-containing manganese oxide powder having a spinel-type crystal structure was synthesized, as to <Raw material and mixing>, <Firing>, <Purifying>, and <Drying>, techniques similar to those in Example 1 were used.

### <Preparation of electrode film unit>

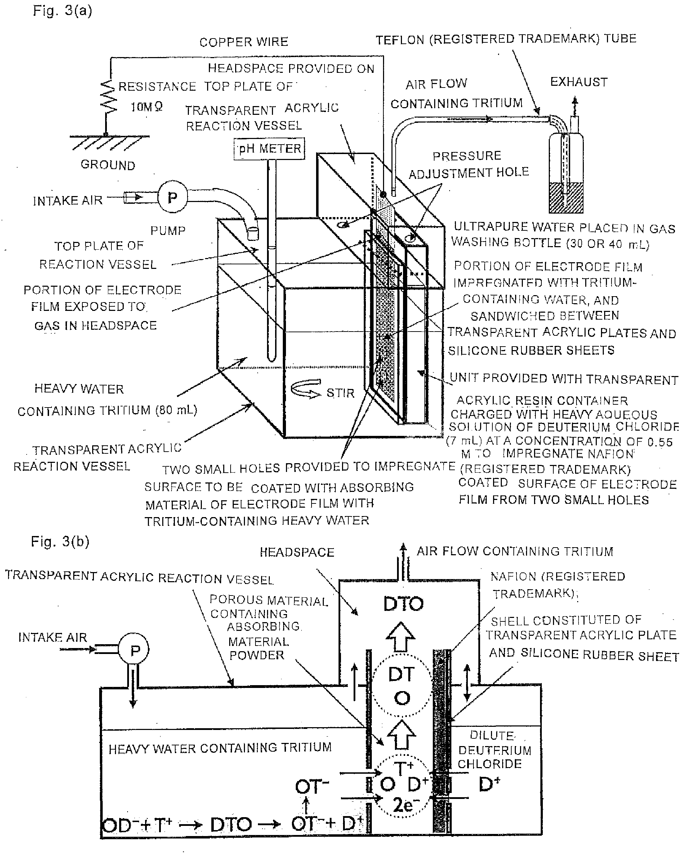

The lithium ion-containing manganese oxide powder in an amount of 0.5 g obtained by the synthesis method described above was fixed on a surface (5.0 cm × 1.5 cm × 0.16 cm) of a platinum mesh (100 mesh, 6.5 cm × 1.5 cm × 0.16 cm) at a film thickness of 0.3 mm by using a conductive coating material (DOTITE XC-12 manufactured by FUJIKURA KASEI CO., LTD.) as a binder, and the resultant fixed powder was subjected to heat drying at 150°C for 3 hours in the atmospheric air by using a dryer (WFO-401 manufactured by TOKYO RIKAKIKAI CO, LTD), as a result of which an electrode film formed in a porous state was obtained at the same time as the binder was carbonized. Next, a dispersion of Nafion (registered trademark) at a concentration of 10% (327-86722 manufactured by Wako Pure Chemical Industries, Ltd.) was uniformly applied on one side (5 cm × 1.5 cm) of the electrode film, and dried at 60°C for 2 hours in the atmospheric air. In the end, the resultant Nafion (registered trademark) was applied on a surface on one side of the electrode film as a hydrogen ion conductive film with the heating at 120°C for one hour in the atmospheric air. Both sides of the electrode film thus obtained were sandwiched between two silicone rubber sheets (6.3 cm × 3.3 cm × 0.1 cm), and further sandwiched between two transparent acrylic plates (6.3 cm × 3.3 cm × 0.1 cm), and the gaps were sealed with a silicone adhesive (Basukoku manufactured by CEMEDINE CO., LTD.). As shown in Figs. 3(a) and 3(b), small holes with a diameter of 2 mm were provided at the positions of 1.4 cm and 2.4 cm from the bottom of the transparent acrylic plate and the silicone rubber sheet. The design was made such that the surface of the electrode film coated with an absorbing material is impregnated with tritium-containing heavy water through these two small holes. Further, the design was made such that the one side coated with Nafion (registered trademark) of the electrode film is provided and impregnated with 7 mL of a heavy aqueous solution of deuterium chloride at a concentration of 0.55 M (prepared by diluting DCI 35% in D₂O 99.5% manufactured by Sigma-Aldrich Co. LLC. with heavy water D214H manufactured by Euriso-top) through the two small holes with a diameter of 2 mm provided at the positions of 1.4 cm and 2.4 cm from the bottom of the transparent acrylic plate and the silicone rubber sheet, which are in contact with the one side.

### <Preparation of tritium-containing heavy water>

In preparation of tritium-containing water, by diluting 4.60 µL of a standard reagent of tritium (American Radiolabeled Chemicals, Inc. ART0194 water [³H] biological grade 1mCi/mL) with 80 mL of heavy water (D214H manufactured by Euriso-top) at room temperature, tritium-containing heavy water for experiment having a radioactive concentration of 5596.7 Bq/mL was prepared. Further, to 1.0 mL of the heavy water used for experiment, 10.0 mL of a surfactant containing a fluorescent agent that emits light with β rays (ULtima Gold manufactured by PerkinElmer, Inc.) was added as a scintillator, by using a liquid scintillation counter (Liquid Scintillation Analyzer TRI-CARB 2100TR manufactured by PACKARD, USA), the radioactive concentration of the tritium in the heavy water was measured as a blank sample, and as a result, 2.0 Bq/mL was obtained. Accordingly, it was confirmed that the detection lower limit of the radioactive concentration of tritium in the present analyzer and under the present conditions was 2.0 Bq/mL.

### <Acid treatment of electrode film>

In a transparent acrylic reaction vessel shown in Fig. 3(a), a unit surface of the electrode film coated with the above-described absorbing material was brought into contact with 32 mL of a heavy aqueous solution of dilute deuterium chloride at a concentration of 0.55 M (prepared by diluting DCI 35% in D₂O 99.5% manufactured by Sigma-Aldrich Co. LLC. with heavy water D214H manufactured by Euriso-top), and was left to stand for two hours. By this acid treatment, lithium ions were eluted from the lithium ion-containing manganese oxide (LiₓMn₂O₄) contained in the electrode film, and the composition was changed to a deuterium ion-containing manganese oxide (DₓMn₂O₄). After that, the heavy aqueous solution of dilute deuterium chloride at a concentration of 0.55 M used for the acid treatment was removed by suction from the reaction vessel, and the surface in contact with the heavy aqueous solution of dilute deuterium chloride was rinsed by using 10 mL of D₂O to wash and remove the heavy aqueous solution of dilute deuterium chloride in the reaction vessel.

### 2: Construction of reaction system for separating and recovering tritium from tritium-containing heavy water

As shown in Fig. 3(a), a reaction vessel in which an electrode film containing deuterium ion-containing manganese oxide powder and a transparent acrylic container with a heavy aqueous solution of dilute deuterium chloride at a concentration of 0.55 M were integrated as a unit was fabricated. By using the reaction vessel, a system in which tritium is separated from tritium-containing heavy water for experiment, and at the same time recovered in the ultrapure water at room temperature placed in a gas washing bottle was constructed. In the system as shown in Fig. 3(b), by impregnating the electrode film with the tritium-containing heavy water for experiment, tritium ions (T⁺) were absorbed in the deuterium ion-containing manganese oxide powder contained in the electrode film through an oxidative decomposition reaction of OT⁻ shown in the above-described chemical formula (2). Further, the design was made such that to the surface coated with Nafion (registered trademark) of the electrode film, deuterium ions (D⁺) are continuously given from the heavy aqueous solution of dilute deuterium chloride at a concentration of 0.55 M. Furthermore, the design was made such that to a portion of the electrode film, which is exposed in a gas phase of a headspace in the reaction vessel, in order to accelerate the transpiration of the isotopomers of water (DTO or T₂O) containing tritium concentrated in accordance with the chemical formulas (3) and (4) in a gas phase from the portion, the air is constantly force-fed by an air pump (W600 manufactured by JAPAN PROCESS DEVELOPMENT CO., LTD.), and the isotopomers of water containing the transpired tritium are introduced in 30 mL of ultrapure water in a gas washing bottle together with air flow through a Teflon (registered trademark) tube.

### 3: Separation and recovery test of tritium from heavy water using electrode film containing deuterium ion-containing manganese oxide powder having spinel-type crystal structure

### <Separation and recovery procedure of tritium from tritium-containing heavy water for experiment>

In the present experiment, as shown in Fig. 3(a), in the reaction vessel after finishing the above-described acid treatment and rinsing, 80 mL of tritium-containing heavy water for experiment having a radioactive concentration of 5596.7 Bq/mL was placed. The initial pH of the tritium-containing heavy water for experiment was 3.96, and the water temperature was 23.8°C. By adding an adequate amount of a NaOD heavy aqueous solution to the tritium-containing heavy water for experiment, the pH was adjusted to 8.86. While stirring the tritium-containing heavy water for experiment by using a magnetic stirrer, 1.2 mL of sample of the tritium-containing heavy water for experiment was filtrated by using a filter paper unit (DISMIC-25ASAN) manufactured by ADVANTEC MFS, Inc., and a disposable syringe (SS-02SZP) manufactured by TERUMO CORPORATION when the pH was decreased to 3 or less. At that time, 1.2 mL of sample was collected from the ultrapure water (30 mL) placed in a gas washing bottle by using a disposable syringe (SS-02SZP) manufactured by TERUMO CORPORATION. After collecting the sample, 0.018 g of lithium chloride (LiCI manufactured by Wako Pure Chemical Industries, Ltd.) was added to the tritium-containing heavy water for experiment. Next, to the tritium-containing heavy water for experiment, an adequate amount of a NaOD heavy aqueous solution was added again, and the pH was adjusted to 6.83. After that, the stirring of the tritium-containing heavy water for experiment was continued, and 1.2 mL of sample was filtrated in the similar manner when the pH was decreased to 3 or less again. A sample in a volume of 1.2 mL was collected also from the ultrapure water in a gas washing bottle in the similar manner. After that, an adequate amount of a NaOD heavy aqueous solution was added again to the tritium-containing heavy water for experiment to adjust the pH to 6.42, the stirring was continued, and 1.2 mL of sample was filtrated in the similar manner again when the pH was decreased to 3 or less again. A sample in a volume of 1.2 mL was collected also from the ultrapure water in a gas washing bottle in the similar manner. The water temperature of the tritium-containing heavy water for experiment was 23.6°C when the last sample was filtrated. To 1.0 mL of each sample precisely weighed and fractionated from 1.2 mL of each sample obtained as described above, 10.0 mL of a surfactant containing a fluorescent agent that emits light with β rays (ULtima Gold manufactured by PerkinElmer, Inc.) was added as a scintillator, and by using a liquid scintillation counter (Liquid Scintillation Analyzer TRI-CARB 2100TR manufactured by PACKARD, USA), the radioactive concentration of the tritium in each sample was measured. Further, a pH meter (F-55, glass electrode 6378-10D manufactured by HORIBA, Ltd.) was used for the measurement of the pH and the water temperature.

### <Test results>

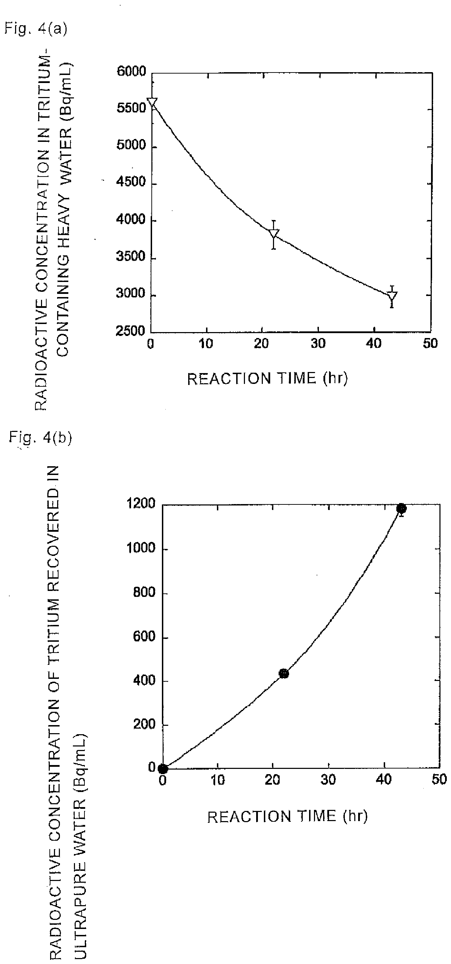

The obtained results were shown in Figs. 4(a) and 4(b). Fig. 4(a) shows the radioactive concentration changes of the tritium contained in each sample (1.0 mL) collected from the tritium-containing heavy water for experiment. Further, Fig. 4(b) shows the radioactive concentration changes of the tritium contained in each sample (1.0 mL) collected from 30 mL of the ultrapure water placed in a gas washing bottle. From the results shown in Fig. 4(a), it was found that the radioactive concentration by the tritium in the tritium-containing heavy water for experiment was decreased from the initial concentration of 5596.7 Bq/mL to 3123.5 Bq/mL. This indicates that around 44.2% of tritium was removed from the tritium-containing heavy water used for experiment. Furthermore, from Fig. 4(b), it was found that the tritium was recovered in the ultrapure water placed in a gas washing bottle with the lapse of the reaction time. It was found that from the results in Fig. 4(a), the total amount of the tritium removed from the tritium-containing heavy water for experiment was around 197859 Bq, and from the results in Fig. 4(b), around 40374 Bq of tritium was recovered in the ultrapure water placed in a gas washing bottle. According to this, it is found that around 20.4% of the total amount of the tritium removed from the tritium-containing heavy water for experiment was recovered in the ultrapure water. It is considered that the tritium unrecovered in the ultrapure water is captured in water droplets generated and attached on the inner wall of the reaction vessel, and therefore, for the improvement of the recovery rate, room for future improvement has been left in the reaction system shown in Fig. 3(a).

The volume of the ultrapure water in a gas washing bottle at the end of the experiment maintained the volume subtracted the decreased volume by the sample collection from the initial volume of 30 mL. These experimental results indicate that the tritium concentration of the ultrapure water is not simply increased with the direct transpiration of the tritium-containing heavy water placed in the reaction vessel in a gas phase in the reaction vessel and with the move of the tritium to a gas washing bottle.

When the results of the present Example are compared with those in Fig. 1, which are experimental results in a case where the tritium absorbing material powder constituted of a deuterium ion-containing manganese oxide having a spinel-type crystal structure is used in the above-described Example 1, it is apparent that Fig. 4(a) showing the results of the present Example indicates continuous decrease of the tritium concentration in heavy water. Further, the tritium concentration in the tritium-containing heavy water for experiment was almost returned to the initial concentration in Example 1. Accordingly, it was proved that the system shown in Figs. 3(a) and 3(b) and used in the present Example functions effectively to separate and recover the tritium in heavy water.

Furthermore, in the present Example, due to the effect of the addition of lithium chloride to the tritium-containing heavy water for experiment, when the pH adjustment was performed three times in total in order to increase the pH from acidity to alkaline, the generation of a precipitate of manganese hydroxide caused by the elution of manganese was able to be suppressed. Specifically, the generation of a precipitate, which can be visually confirmed during each pH adjustment, was hardly generated. When the similar pH adjustment was performed to the tritium-containing heavy water for experiment without adding a water-soluble lithium salt, a large amount of precipitates were generated in the tritium-containing heavy water for experiment. Accordingly, it can be said that when the actual tritium-containing heavy water is treated, the addition of a lithium salt is an essential operation in order to minimize the generation of sludge and to increase the reusability of an absorbing material.

### [Example 4]

### [Separation and recovery of tritium from heavy water using tritium absorption unit containing hydrogen ion-containing manganese oxide powder having spinel-type crystal structure]

### 1: Preparation of electrode film containing hydrogen ion-containing manganese oxide powder having spinel-type crystal structure

In accordance with the following procedures, an electrode film containing deuterium ion-containing manganese oxide powder having a spinel-type crystal structure was prepared.

When lithium ion-containing manganese oxide powder having a spinel-type crystal structure was synthesized, as to <Raw material and mixing>, <Firing>, <Purifying>, and <Drying>, techniques similar to those in Example 1 were used.

### <Preparation of electrode film unit>

The lithium ion-containing manganese oxide powder in an amount of 0.5 g obtained by the synthesis method described above was fixed on a surface (5.0 cm × 1.5 cm × 0.16 cm) of a platinum mesh (100 mesh, 6.5 cm × 1.5cm × 0.16 cm) at a film thickness of 0.3 mm by using a conductive coating material (DOTITE XC-12 manufactured by FUJIKURA KASEI CO., LTD.) as a binder, and the resultant fixed powder was subjected to heat drying at 150°C for 3 hours in the atmospheric air by using a dryer (WFO-401 manufactured by TOKYO RIKAKIKAI CO, LTD), as a result of which an electrode film formed in a porous state was obtained at the same time as the binder was carbonized. Next, a dispersion of Nafion (registered trademark) at a concentration of 10% (327-86722 manufactured by Wako Pure Chemical Industries, Ltd.) was uniformly applied on one side (5 cm × 1.5 cm) of the electrode film, and dried at 60°C for 2 hours in the atmospheric air. In the end, the resultant Nafion (registered trademark) was applied on a surface on one side of the electrode film as a hydrogen ion conductive film with the heating at 120°C for 1 hour in the atmospheric air. Both sides of the electrode film thus obtained were sandwiched between two silicone rubber sheets (6.3 cm × 3.3 cm × 0.1 cm), and further sandwiched between two transparent acrylic plates (6.3 cm × 3.3 cm × 0.1 cm), and the gaps were sealed with a silicone adhesive (Basukoku manufactured by CEMEDINE CO., LTD.). As shown in Figs. 3(a) and 3(b), small holes with a diameter of 2 mm were provided at the positions of 1.4 cm and 2.4 cm from the bottom of the transparent acrylic plate and the silicone rubber sheet. The design was made such that the surface of the electrode film coated with an absorbing material is impregnated with tritium-containing heavy water through these two small holes. Further, the one side coated with Nafion (registered trademark) of the electrode film is provided and impregnated with 7 mL of a dilute hydrochloric acid aqueous solution at a concentration of 0.5 M (manufactured by Wako Pure Chemical Industries, Ltd.) through the two small holes with a diameter of 2 mm provided at the positions of 1.4 cm and 2.4 cm from the bottom of the transparent acrylic plate and the silicone rubber sheet, which are in contact with the one side.

### <Preparation of tritium-containing heavy water>

In preparation of tritium-containing water, by diluting 4.60 µL of a standard reagent of tritium (American Radiolabeled Chemicals, Inc. ART0194 water [³H] biological grade 1mCi/mL) with 80 mL of heavy water (D214H manufactured by Euriso-top) at room temperature, tritium-containing heavy water for experiment having a radioactive concentration of 5948.6 Bq/mL was prepared.

### <Acid treatment of electrode film>

In a transparent acrylic reaction vessel shown in Figs. 3(a) and 3(b), a unit surface of the electrode film coated with the above-described absorbing material was brought into contact with 120 mL of dilute hydrochloric acid at a concentration of 0.5 M, and left to stand for 2 hours, and lithium ions were eluted from the lithium ion-containing manganese oxide (LiₓMn₂O₄) contained in the electrode film, as a result of which the composition was changed to a hydrogen ion-containing manganese oxide (HₓMn₂O₄). After that, the dilute hydrochloric acid aqueous solution at a concentration of 0.5 M used for the acid treatment was removed by suction from the reaction vessel, and the surface in contact with the heavy aqueous solution of dilute deuterium chloride was rinsed by using 10 mL of D₂O to wash and remove the dilute hydrochloric acid aqueous solution in the reaction vessel.

### 2: Construction of reaction system for separating and recovering tritium from tritium-containing heavy water

As shown in Fig. 3(a), a reaction vessel in which an electrode film containing hydrogen ion-containing manganese oxide powder and a transparent acrylic container with a dilute hydrochloric acid aqueous solution at a concentration of 0.5 M were integrated as a unit was fabricated. By using the reaction vessel, a system in which tritium is separated from tritium-containing heavy water for experiment, and at the same time recovered in the ultrapure water at room temperature placed in a gas washing bottle was constructed. In the system as shown in Fig. 3(b), by impregnating the electrode film with the tritium-containing heavy water for experiment, tritium ions (T⁺) were absorbed in the hydrogen ion-containing manganese oxide powder contained in the electrode film through an oxidative decomposition reaction of OT⁻ shown in the above-described chemical formula (2). Further, the design was made such that to the surface coated with Nafion (registered trademark) of the electrode film, hydrogen ions (H⁺) are continuously given from the dilute hydrochloric acid aqueous solution at a concentration of 0.5 M. Furthermore, the design was made such that to a portion of the electrode film, which is exposed in a gas phase of a headspace in the reaction vessel, in order to accelerate the transpiration of the isotopomers of water (DTO, DHO, or T₂O) containing tritium concentrated in accordance with the chemical formulas (3) and (4) in a gas phase from the portion, the air is constantly force-fed by an air pump (W600 manufactured by JAPAN PROCESS DEVELOPMENT CO., LTD.), and the isotopomers of water containing the transpired tritium are introduced in 40 mL of ultrapure water in a gas washing bottle together with air flow through a Teflon (registered trademark) tube. In addition, in the present Example, a dilute hydrochloric acid aqueous solution at a concentration of 0.5 M was used in place of the heavy aqueous solution of dilute deuterium chloride at a concentration of 0.55 M shown in Figs. 3(a) and 3(b). Further, it is required to replace the portion described as D in the above-described chemical formulas (1) to (4) with H.

### 3: Separation and recovery test of tritium from heavy water using electrode film containing deuterium ion-containing manganese oxide powder having spinel-type crystal structure

### <Separation and recovery procedure of tritium from tritium-containing heavy water for experiment>

In the present experiment, as shown in Fig. 3(a), in the reaction vessel after finishing the above-described acid treatment and rinsing, 80 mL of tritium-containing heavy water for experiment having a radioactive concentration of 5948.6 Bq/mL was placed. The initial pH of the tritium-containing heavy water for experiment was 3.63, and the water temperature was 27.3°C. By adding an adequate amount of a NaOD heavy aqueous solution to the tritium-containing heavy water for experiment, the pH was adjusted to 9.95. While stirring the tritium-containing heavy water for experiment by using a magnetic stirrer, 1.2 mL of sample of the tritium-containing heavy water for experiment was filtrated by using a filter paper unit (DISMIC-25ASAN) manufactured by ADVANTEC MFS, Inc., and a disposable syringe (SS-02SZP) manufactured by TERUMO CORPORATION when the pH was decreased to 3 or less. At that time, 1.2 mL of sample was collected from the ultrapure water (40mL) placed in a gas washing bottle by using a disposable syringe (SS-02SZP) manufactured by TERUMO CORPORATION. After collecting the sample, 0.020 g of lithium chloride (LiCI manufactured by Wako Pure Chemical Industries, Ltd.) was added to the tritium-containing heavy water for experiment. Next, to the tritium-containing heavy water for experiment, an adequate amount of a NaOD heavy aqueous solution was added again, and the pH was adjusted to 7.0. After that, the stirring of the tritium-containing heavy water for experiment was continued, and 1.2 mL of sample was filtrated in the similar manner when the pH was decreased to 3 or less again. A sample in a volume of 1.2 mL was collected also from the ultrapure water in a gas washing bottle in the similar manner. After that, an adequate amount of a NaOD heavy aqueous solution was added again to the tritium-containing heavy water for experiment to adjust the pH to 8.46, the stirring was continued, and 1.2 mL of sample was filtrated in the similar manner again when the pH was decreased to 4.08. A sample in a volume of 1.2 mL was collected also from the ultrapure water in a gas washing bottle in the similar manner. The water temperature of the tritium-containing heavy water for experiment was 26.7°C when the last sample was filtrated. To 1.0 mL of each sample precisely weighed and fractionated from 1.2 mL of each sample obtained as described above, 10.0 mL of a surfactant containing a fluorescent agent that emits light with β rays (ULtima Gold manufactured by PerkinElmer, Inc.) was added as a scintillator, and by using a liquid scintillation counter (Liquid Scintillation Analyzer TRI-CARB 2100TR manufactured by PACKARD, USA), the radioactive concentration of the tritium in each sample was measured. Further, a pH meter (F-55, glass electrode 9615S-10D manufactured by HORIBA, Ltd.) was used for the measurement of the pH and the water temperature.

### <Test results>

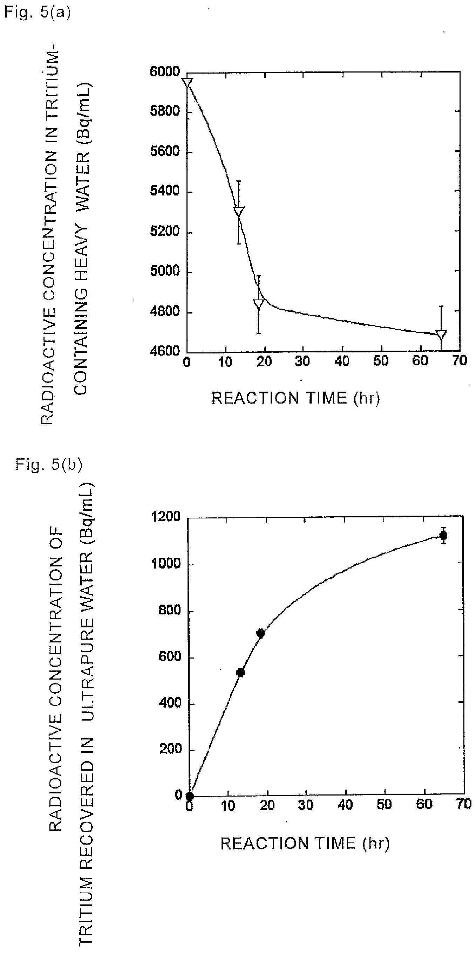

The obtained results were shown in Figs. 5(a) and 5(b). Fig. 5(a) shows the radioactive concentration changes of the tritium contained in each sample (1.0 mL) collected from the tritium-containing heavy water for experiment. Further, Fig. 5(b) shows the radioactive concentration changes of the tritium contained in each sample (1.0 mL) collected from 40 mL of the ultrapure water placed in a gas washing bottle. From the results shown in Fig. 5(a), it was found that the radioactive concentration by the tritium in the tritium-containing heavy water for experiment was decreased from the initial concentration of 5948.6 Bq/mL to 4679.8 Bq/mL. This indicates that around 21.3% of tritium was removed from the tritium-containing heavy water used for experiment. Furthermore, from Fig. 5(b), it was found that the tritium was recovered in 40 mL of the ultrapure water placed in a gas washing bottle with the lapse of the reaction time. It was found that from the results in Fig. 5(a), the total amount of the tritium removed from the tritium-containing heavy water for experiment was around 101500 Bq, and from the results in Fig. 5(b), around 44680 Bq of tritium was recovered in the ultrapure water placed in a gas washing bottle. According to this, it was found that around 44.1 % of the total amount of the tritium removed from the tritium-containing heavy water for experiment was recovered in the ultrapure water. It is considered that the tritium unrecovered in the ultrapure water is captured in water droplets generated and attached on the inner wall of the reaction vessel. The volume of the ultrapure water in a gas washing bottle at the end of the experiment maintained the volume subtracted the decreased amount by the sample collection from the initial volume of 40 mL. These experimental results indicate that the tritium concentration of the ultrapure water in a gas washing bottle is not simply increased with the direct transpiration of the tritium-containing heavy water in the reaction vessel in a gas phase in the reaction vessel and with the move of the tritium to a gas washing bottle.

When the results shown in Fig. 5(a) in the present Example 4 is compared with the results shown in Fig. 4(a) in the above-described Example 3, it seems that the tendency to decrease the tritium concentration is weakened in the sample collected in the end of the reaction time. This is considered to be caused by the pH 4.08 of the tritium-containing heavy water for experiment when the last sample was collected in the present Example, and not the pH 3 or less. As the reason for this, it is expected that in a case where the pH of tritium-containing heavy water for experiment is 4 or more, the tritium release reaction shown in the above-described chemical formula (3), which is considered to proceed under a strong acidic condition, is not actively generated, and therefore, the sufficient concentration of isotopomers of a water molecule (DTO or HTO) containing tritium is not generated on a surface of the portion of the electrode film, which is exposed to a gas in a headspace of the reaction vessel.

Moreover, when the results of the present Example 4 are compared with those in Fig. 2, which are experimental results in a case where the tritium absorbing material powder constituted of a hydrogen ion-containing manganese oxide having a spinel-type crystal structure is used in the above-described Example 2, it is apparent that in Fig. 5(a) showing the results of the present Example, the continuous decrease of the tritium concentration in heavy water is obtained. Accordingly, it was proved that the system shown in Figs. 3(a) and 3(b) and used in the present Example functions effectively to separate and recover the tritium in heavy water also in a case where an electrode film containing a hydrogen ion-containing manganese oxide was used.

In the present Example 4, an electrode film containing a hydrogen ion-containing manganese oxide was used as a tritium absorbing material, and further hydrogen ions (H⁺) were given to the electrode film from the dilute hydrochloric acid aqueous solution at a concentration of 0.5 M. Accordingly, H⁺ were mixed into the heavy water containing tritium, which is a treatment object. In a case of requiring the tritium separation in which H⁺ are not mixed into the heavy water (D₂O) to be a treatment object, it is preferred to use an electrode film containing a deuterium ion-containing manganese oxide as the tritium absorbing material shown in Example 3. However, when considering that heavy water and deuterium chloride are expensive, in a case where the mixing of H⁺ into the heavy water (D₂O) to be a treatment object is not a problem, it is preferred to use the absorbing material and the technique in the present Example 4, for which the cost of chemicals is low.

Furthermore, in the present Example, due to the effect of the addition of lithium chloride to the tritium-containing heavy water for experiment, when the pH adjustment was performed three times in total in order to increase the pH from acidity to alkaline, the generation of a precipitate of manganese hydroxide caused by the elution of manganese was able to be suppressed. Specifically, the generation of a precipitate, which can be visually confirmed during each pH adjustment, was hardly generated. When the similar pH adjustment was performed to the tritium-containing heavy water for experiment without adding a water-soluble lithium salt, a large amount of precipitates were generated in the tritium-containing heavy water for experiment. Accordingly, it can be said that when the actual tritium-containing heavy water is treated, the addition of a lithium salt is an essential operation in order to minimize the generation of sludge and to increase the reusability of an absorbing material.

## Claims

1. A tritium absorbing material for collecting tritium from heavy water containing tritium, comprising:
a deuterium ion-containing manganese oxide having a spinel-type crystal structure.

2. A method for collecting tritium from heavy water containing tritium using a tritium absorbing material comprising a deuterium ion- or hydrogen ion-containing manganese oxide having a spinel-type crystal structure.

3. A method as claimed in claim 2, wherein the step of collecting comprises separating and recovering tritium from heavy water, wherein
powder or a constituent from powder of a tritium absorbing material comprising a deuterium ion- or hydrogen ion-containing manganese oxide having a spinel-type crystal structure is supported on a conductive porous material to form an electrode film, one side surface of the electrode film is coated with a hydrogen ion conducting material, deuterium ions or hydrogen ions are given to the surface of the electrode film coated with the hydrogen ion conducting material, and heavy water containing tritium is brought into contact with a surface of the electrode film not coated with a hydrogen ion conducting material.

4. A method for separating and recovering tritium from heavy water as claimed in claim 3, wherein
the electrode film is constituted by dividing into a portion to capture tritium while being immersed in heavy water containing tritium, and a portion to transpire the captured tritium in a gas phase as an isotopomer of water.

5. A method for separating and recovering tritium from heavy water as claimed in claim 3 or claim 4, wherein
the pH of heavy water containing tritium to be brought into contact with the tritium absorbing material is adjusted to 4 or more to 10 or less, and the tritium is captured in the tritium absorbing material from the heavy water, and the pH of the heavy water containing tritium is adjusted to 3 or less, and the tritium captured in the tritium absorbing material is released as the isotopomer of water.

6. A method for separating and recovering tritium from heavy water as claimed in any one of claims 3 to 5, wherein
elution of manganese from a tritium absorbing material is prevented by adding lithium ions to heavy water containing tritium to be brought into contact with the tritium absorbing material.

## Patentansprüche

1. Tritiumabsorbierendes Material zum Sammeln von Tritium aus tritiumhaltigem Schwerwasser, umfassend:
ein deuteriumionenhaltiges Manganoxid mit einer Kristallstruktur vom Spinell-Typ.

2. Verfahren zum Sammeln von Tritium aus tritiumhaltigem Schwerwasser mittels eines tritiumabsorbierenden Materials, das ein deuteriumionen- oder wasserstoffionenhaltiges Manganoxid mit einer Kristallstruktur vom Spinell-Typ umfasst.

3. Verfahren nach Anspruch 2, wobei der Schritt des Sammelns die Abtrennung und Rückgewinnung von Tritium aus Schwerwasser umfasst,
wobei
Pulver oder ein Bestandteil von Pulver eines tritiumabsorbierenden Materials, das ein deuteriumionen- oder wasserstoffionenhaltiges Manganoxid mit einer Kristallstruktur vom Spinell-Typ umfasst, auf ein leitfähiges poröses Material aufgebracht wird, um einen Elektrodenfilm zu bilden, wobei eine Seitenfläche des Elektrodenfilms mit einem wasserstoffionenleitenden Material beschichtet ist, Deuteriumionen oder Wasserstoffionen an die Oberfläche des mit dem wasserstoffionenleitenden Material beschichteten Elektrodenfilms abgegeben werden und tritiumhaltiges Schwerwasser in Kontakt mit einer Oberfläche des Elektrodenfilms gebracht wird, die nicht mit einem wasserstoffionenleitenden Material beschichtet ist.

4. Verfahren zur Abtrennung und Rückgewinnung von Tritium aus Schwerwasser nach Anspruch 3, wobei
der Elektrodenfilm durch Aufteilung in einen Teil zum Einfangen von Tritium, während er in tritiumhaltiges Schwerwasser eingetaucht wird, und einen Teil zur Transpiration des eingefangenen Tritiums in eine Gasphase als ein Isotopomer von Wasser gebildet wird.

5. Verfahren zur Abtrennung und Rückgewinnung von Tritium aus Schwerwasser nach Anspruch 3 oder Anspruch 4, wobei
der pH-Wert des tritiumhaltigen Schwerwassers, das mit dem tritiumabsorbierenden Material in Kontakt gebracht werden soll, auf 4 oder mehr bis 10 oder weniger eingestellt wird, und das Tritium in dem tritiumabsorbierenden Material aus dem Schwerwasser eingefangen wird, und der pH-Wert des tritiumhaltigen Schwerwassers auf 3 oder weniger eingestellt wird, und das in dem tritiumabsorbierenden Material eingefangene Tritium als Isotopomer des Wassers freigesetzt wird.

6. Verfahren zur Abtrennung und Rückgewinnung von Tritium aus Schwerwasser nach einem der Ansprüche 3 bis 5, wobei
die Elution von Mangan aus einem tritiumabsorbierenden Material durch Zugabe von Lithiumionen zu tritiumhaltigem Schwerwasser, das in Kontakt mit dem tritiumabsorbierenden Material gebracht werden soll, verhindert wird.

## Revendications

1. Matériau absorbant le tritium pour la collecte de tritium à partir d'eau lourde contenant du tritium, comprenant :
un oxyde de manganèse contenant des ions deutérium présentant une structure cristalline de type spinelle.

2. Procédé de collecte de tritium à partir d'eau lourde contenant du tritium à l'aide d'un matériau absorbant le tritium comprenant un oxyde de manganèse contenant des ions deutérium ou des ions hydrogène présentant une structure cristalline de type spinelle.

3. Procédé selon la revendication 2, dans lequel l'étape de collecte comprend la séparation et la récupération de tritium à partir d'eau lourde, dans lequel
de la poudre ou un constituant de poudre d'un matériau absorbant le tritium comprenant un oxyde de manganèse contenant des ions deutérium ou des ions hydrogène présentant une structure cristalline de type spinelle est supporté(e) sur un matériau poreux conducteur pour former un film d'électrode, une surface latérale du film d'électrode est revêtue avec un matériau conducteur d'ions hydrogène, des ions deutérium ou des ions hydrogène sont donnés à la surface du film d'électrode revêtue avec le matériau conducteur d'ions hydrogène, et l'eau lourde contenant le tritium est mise en contact avec une surface du film d'électrode non revêtue d'un matériau conducteur d'ions hydrogène.

4. Procédé de séparation et de récupération de tritium à partir d'eau lourde selon la revendication 3, dans lequel
le film d'électrode est constitué par division en une partie pour capturer le tritium alors qu'il est immergé dans une eau lourde contenant du tritium, et une partie pour transpirer le tritium capturé dans une phase gazeuse sous la forme d'un isotopomère de l'eau.

5. Procédé de séparation et de récupération de tritium à partir d'eau lourde selon la revendication 3 ou la revendication 4, dans lequel
le pH de l'eau lourde contenant le tritium à mettre en contact avec le matériau absorbant le tritium est ajusté à 4 ou plus jusqu'à 10 ou moins, et le tritium est capturé dans le matériau absorbant le tritium à partir de l'eau lourde, et le pH de l'eau lourde contenant le tritium est ajusté à 3 ou moins, et le tritium capturé dans le matériau absorbant le tritium est libéré sous la forme de l'isotopomère de l'eau.

6. Procédé de séparation et de récupération de tritium à partir d'eau lourde selon l'une quelconque des revendications 3 à 5, dans lequel
l'élution de manganèse à partir d'un matériau absorbant le tritium est empêchée par ajout d'ions lithium à de l'eau lourde contenant du tritium à mettre en contact avec le matériau absorbant le tritium.
